# EUROPEAN PATENT APPLICATION

(11) **EP 0 967 752 A2**
(43) Date of publication of application: **29.12.1999**
(21) Application number: 99111906.6
(22) Date of filing: 21.06.1999
(51) Int. Cl.: H04J 14/02, H04B 10/213, H04B 10/18

(54) **WDM transmission system**

(30) Priority: 24.06.1998 JP 17737798
(71) Applicant: Sumitomo Electric Industries, Ltd., Osaka-shi, Osaka 541-0041 (JP); Japan Telecom Co., Ltd., Tokyo 104-8508 (JP)
(72) Inventor: Tanaka, Shigeru, Yokohama Works of Sumitomo, Yokohama-shi, Kanagawa 244-8588 (JP); Shimabayashi, Yasushi, Japan Telecom Co., Ltd., Chuo-ku, Tokyo 104-8508 (JP)
(74) Representative: HOFFMANN - EITLE

(57) **Abstract**

The present invention relates to a WDM transmission system which has a structure for improving the durability with respect to troubles as the whole system and is excellent in the efficiency of utilization of its transmission line. In the WDM transmission system, on a closed loop optical transmission line, including no optically disconnected portion, provided with a plurality of branch stations for receiving and transmitting a part of signal light in a WDM signal group and an optical amplifier for amplifying individual signal light components of the WDM signal group, a filter for selectively transmitting therethrough individual signal light components of the WDM signal group is further disposed in order to prevent the ASE generated upon optical amplification from traveling around the closed loop optical transmission line.

## Description

### BACKGROUND OF THE INVENTION

### Field of the Invention

The present invention relates to a WDM (Wavelength Division Multiplexing) transmission system for transmitting, by way of a closed loop optical transmission line including no optically disconnected portion, a WDM signal group including a plurality of signal light components having wavelengths different from each other.

### Related Background Art

In general, WDM transmission systems enable high-speed, large-capacity optical communications by transmitting, by way of optical transmission lines, a WDM signal group including a plurality of signal light components. Among others, there is a ring type WDM transmission system in which a WDM signal group sent out from a master station reaches the master station again by way of a predetermined route.

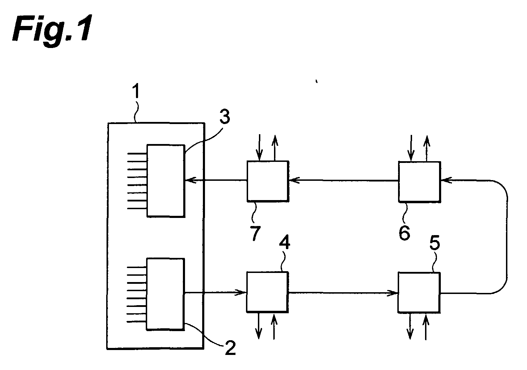

A typical configuration of conventional WDM transmission systems is shown, for example, in Fig. 1 of "The 1995 Communications Society Conference of the Institute of Electronics, Information and Communication Engineers, SB-9-5" (first conventional example). Also, a WDM transmission system equipped with a master station for connecting a plurality of networks, which has a configuration similar to that of the first conventional example, is disclosed in U.S. Patent No. 5,854,698 (second conventional example). Fig. 1 is a view schematically showing the configuration of WDM transmission system according to the first and second conventional examples, the configuration of their master station in particular. This conventional WDM transmission system comprises, on an optical transmission line, a master station 1 (a hub station acting as an access point to another transmission line) for sending out and receiving a WDM signal group, and branch stations 4 to 7 provided so as to correspond to their respective components of the WDM signal group sent out from the master station and propagating through the transmission line. The master station 1 is equipped with a multiplexer 2 and a demultiplexer 3.

A plurality of input ports are provided so as to correspond to a plurality of signal light components to be included in the WDM signal group for the multiplexer 2 in the master station 1. The respective signal light components received by way of these input ports are multiplexed by the multiplexer 2, and the resulting WDM signal group is sent out from the master station 1 into the transmission line. The WDM signal group sent out from the master station 1 into the transmission line firstly reaches the first branch station 4, where the signal light component allocated to the first branch station 4 is demultiplexed from the WDM signal group. On the other hand, a new signal light component is multiplexed at the first branch station 4 into the WDM signal group sent out into the transmission line.

The signal light components not received by the first branch station 4 and the signal light component newly sent out from the first branch station 4 reach the second branch station 5 located downstream the first branch station 4. As with the first branch station 4, the second branch station 5 receives the signal light component allocated to the second branch station 5 from the signal light that has arrived there, and sends out a signal light component having the same wavelength as that of the signal light component thus received into the transmission line. Similarly, the WDM signal group successively travels by way of the third branch station 6 and the fourth branch station 7, and finally reaches the master station 1.

At the master station 1, the signal light that has arrived there is demultiplexed by the demultiplexer 3, and the resulting signal light components are taken out by way of their corresponding output ports.

### SUMMARY OF THE INVENTION

As a result of studies concerning the above-mentioned background art, the inventor has found the following problems. Namely, the above-mentioned conventional WDM transmission systems require the multiplexer 2 and demultiplexer 3 having higher-grade functions (thus making them more expensive) since all the signal light components included in the WDM signal group are multiplexed and demultiplexed in the master station 1 (hub station). Consequently, a system having such a highly functional master station 1 has not been suitable for a small-scale WDM transmission system. Also, in such a mode in which the master station manages the sending and receiving of all the signal light components, the function of the whole system will be lost if any trouble occurs in the master station. Hence, the durability of the conventional WDM transmission systems with respect to troubles such as natural disasters and malfunctions of devices has not been sufficient.

On the other hand, though the master station 1 and the individual branch stations 4 to 7 are connected to each other by way of the transmission line, the optical transmission line is optically disconnected within the master station 1. As a consequence, even when the transmitting/receiving of a signal light component having a predetermined wavelength is to be effected between the first branch station 4 and the fourth branch station 7, for example, it is necessary for the first branch station 4 to send out this signal light component to the fourth branch station 7 by way of the second and third branch stations 5, 6. Thus, the transmitting/receiving between the individual branch stations 4, 7 by way of the master station 1 (by which the transmission loss can be made low since the transmission path length is short) cannot be effected. Hence, the efficiency of utilization of the optical transmission line has been low.

In order to overcome the problems mentioned above, it is an object of the present invention to provide a WDM transmission system which is excellent in the efficiency of utilization of the optical transmission line, while improving the durability of the whole system with respect to troubles such as natural disasters and malfunctions of devices.

In order to overcome the above-mentioned problems, the WDM transmission system according to the present invention comprises a closed loop transmission line in which a WDM signal group including a plurality of signal light components within a predetermined wavelength band propagates in a predetermined direction, the closed loop transmission line including no optically disconnected portion; and a plurality of branch stations, arranged in the closed loop transmission line, functioning to demultiplex at least one signal light component from the WDM signal group and multiplex a new signal light component into the remaining signal light component in the WDM signal group without optically blocking the propagation of the WDM signal group. Further, the WDM transmission system according to the present invention may be provided with two channels of such closed loop systems so that WDM signal groups propagate in their respective directions different from each other, thereby enabling bidirectional optical communications.

The remarkable point in this configuration is that the WDM transmission system is not provided with a master station which monitors the whole transmission line or becomes an access point to another transmission line (network). Each branch station demultiplexes only its allocated signal light component (having a wave number smaller than that of the whole signal light included in the WDM signal group) and passes the remaining signal light components therethrough toward its downstream branch station. Therefore, even if a trouble occurs in any of the branch stations, it will not affect the signal light transmission between other branch stations, whereby the function of the whole system will not be lost. Also, since at least one signal light component is allocated to each branch station beforehand, a signal light component used for communications between given branch stations can also be used in the remaining transmission sections as long as they are between branch stations to which a common signal light component is allocated, for example, if the state of utilization of signal light is successively communicated from each branch station to its downstream branch station, whereby the efficiency of the whole transmission line can be improved.

In the WDM transmission system according to the present invention, an optical amplifier for amplifying individual signal light components included in the propagating WDM signal group is disposed in the closed loop transmission line. Here, as the amplifier, it is not necessary to use a highly functional optical amplifier having such a wide amplification band that it can amplify all the signal light components included in the WDM signal group. A plurality of optical amplifiers having narrow amplification bands different from each other (which may partly overlap each other) may be provided as well. It is preferred that the total gain of the optical amplifiers disposed in the closed loop transmission line be sufficient for canceling the cumulative loss caused by the closed loop transmission line and plurality of branch stations in the WDM signal group traveling around the closed loop transmission line. Preferably, these optical amplifiers are disposed at predetermined positions in the closed loop transmission line where the respective signal light components allocated to the plurality of branch stations have signal levels not lower than the minimum receiving levels in the respective branch stations.

Since the transmission line of the WDM transmission system according to the present invention is a closed loop transmission line having no optically disconnected portion, if the amplified spontaneous emission (ASE) generated due to signal amplification travels therearound together with the WDM signal group, it will become a large noise component. Therefore, in order to avoid such a loop oscillation, the WDM transmission system is equipped with a filter functioning to selectively transmit therethrough only the individual signal light components included in the WDM signal group and eliminate at least a light component in the vicinity of a transmission wavelength thereof. This filter may comprise a plurality of wavelength-selecting filters disposed at predetermined positions in the closed loop transmission line. In this case, the plurality of wavelength-selecting filters are configured so as to selectively block light components within their respective specific wavelength ranges, thereby transmitting therethrough only the above-mentioned signal light components in total.

Also, as the filter function in the WDM transmission system according to the present invention, it is preferred that one of the plurality of branch stations be configured so as to optically disconnect a signal light component which is not used by any of the plurality of branch stations. This configuration can eliminate the loop oscillation of unused signal light component.

### BRIEF DESCRIPTION OF THE DRAWINGS

Fig. 1 is a view showing the schematic configuration of a conventional WDM transmission system;
Fig. 2 is a view showing the schematic configuration of a first embodiment (single closed loop transmission line) of the WDM transmission system according to the present invention;
Fig. 3A is a view showing the schematic configuration of each branch station shown in Fig. 2, whereas Fig. 3B is a view showing the configuration of a Mach-Zehnder interferometer for realizing the demultiplexing and multiplexing functions in each branch station;
Figs. 4A and 4B are charts for explaining operations of optical amplifiers according to the present invention;
Fig. 5 is a chart showing the transmission characteristic of a filter in the WDM transmission system according to the present invention;
Fig. 6 is a view showing the schematic configuration of the filter in the WDM transmission system according to the present invention;
Fig. 7 is a view showing a modified mode of signal transmission in the WDM transmission system shown in Fig. 2;
Fig. 8 is a view showing the schematic configuration of a second embodiment (double closed loop transmission line) of the WDM transmission system according to the present invention;
Fig. 9 is a view showing the schematic configuration of each branch station shown in Fig. 8; and
Figs. 10A to 10C are charts showing transmission characteristics as other embodiments of filter in the WDM transmission system according to the present invention.

### DESCRIPTION OF THE PREFERRED EMBODIMENTS

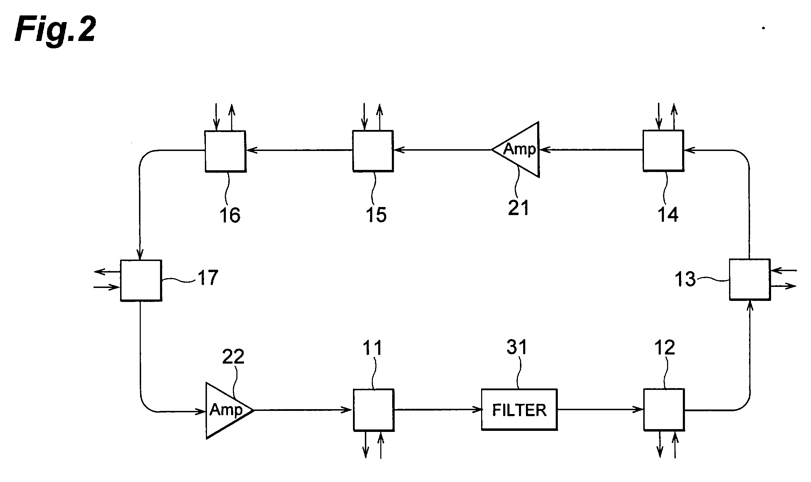

In the following, the WDM transmission system according to the present invention will be explained with reference to Figs. 2, 3A and 3B, 4A and 4B, 5 to 9, and 10A to 10C. In the explanation of drawings, constituents identical to each other will be referred to with numerals or letters identical to each other, without repeating their overlapping descriptions.

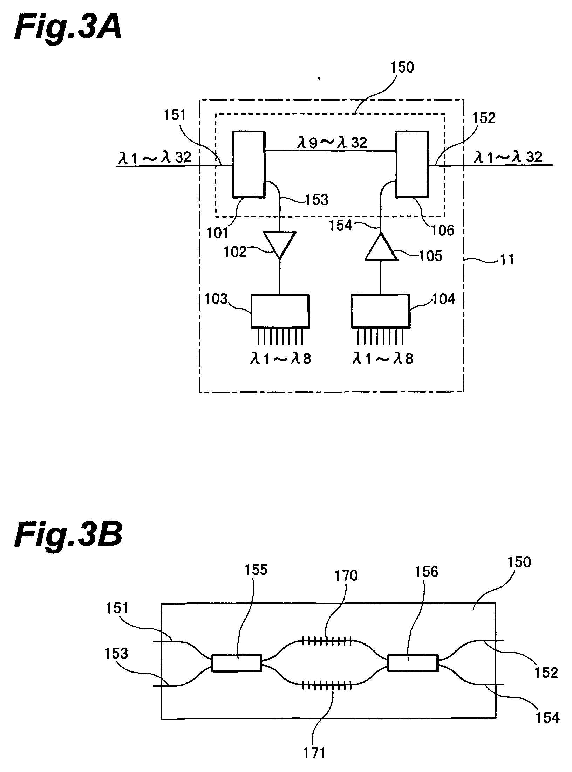

Fig. 2 is a view showing the schematic configuration of the first embodiment of the WDM transmission system according to the present invention, whereas Fig. 3A is a view showing the schematic configuration of each branch station shown in Fig. 2.

The WDM transmission system according to this embodiment is equipped with a single closed loop transmission line in which a WDM signal group including a plurality of signal light components propagates in a predetermined direction. The closed loop transmission line includes no optically disconnected portion. Arranged on the closed loop transmission line are a first branch station 11, a filter 31, a second branch station 12, a third branch station 13, a fourth branch station 14, an optical amplifier 21 (inline amplifier), a fifth branch station 15, a sixth branch station 16, a seventh branch station 17, and an optical amplifier 22 (inline amplifier). For example, the closed loop transmission line is an optical fiber line. At least two branch stations, at least one filter, and at least one optical amplifier are disposed on the closed loop transmission line. As will be mentioned later, a predetermined signal light amplification gain is required for the optical amplifiers.

Each of the first branch station 11 to seventh branch station 17 is configured so as to receive or send out a respective signal light component in the WDM signal group that has arrived there and send out the remaining signal light components without optically disconnecting them.

Fig. 3A is a view showing the schematic configuration of such a first branch station 11. The other branch stations 12 to 17 have a configuration similar thereto. In Fig. 3A, the first branch station 11 is equipped with an optical ADM (Add-Drop Multiplexer) 150 for demultiplexing and multiplexing a part (e.g., 8 waves of signal light (λ1 to λ8)) of the signal light (e.g., 32 waves of signal light (λ1 to λ32)) included in the WDM signal group that has arrived there. The optical ADM 150 is constituted by a demultiplexer 101 and a multiplexer 106. The first branch station 11 further comprises a first optical amplifier 102, a demultiplexer 103, a multiplexer 104, a second optical amplifier 105, and the demultiplexer 106. Here, both of the first and second optical amplifiers 102, 105 will be unnecessary if the signal light treated has a sufficient intensity.

The demultiplexer 101 has an entrance end 151 for receiving the WDM signal group and an output port 153 for outputting the demultiplexed signal light. In the above-mentioned example, a part (λ1 to λ8) is taken out from the signal light (λ1 to λ32) included in the WDM signal group that has arrived at the demultiplexer 101. The first optical amplifier 102 optically amplifies each of the signal light components (λ1 to λ8) fed therein by way of the output port 153, and sends out the signal light components (λ1 to λ8) thus optically amplified to the demultiplexer 103. The demultiplexer 103 is equipped with a plurality of output ports provided so as to correspond to the respective wavelengths of the individual signal light components, whereby the individual signal light components (λ1 to λ8) led to the demultiplexer 103 are taken out from their corresponding output ports. Each output port of the demultiplexer 103 is connected to a photodetector device such as photodiode, for example, whereby each signal light component taken out from its corresponding output port is detected by the respective photodetector device.

On the other hand, the multiplexer 104 receives new signal light components (those having the same wavelengths as the signal light components (λ1 to λ8) taken out by the demultiplexer 101 in this embodiment) by way of a plurality of input ports, and new signal light components (λ1 to λ8) thus multiplexed are led to the second optical amplifier 105. The new signal light components (λ1 to λ8) optically amplified by the second optical amplifier 105 are received by the multiplexer 106 by way of an input port 154. The new signal light components (λ1 to λ8) are multiplexed with the remaining signal light components (λ9 to λ32) by the multiplexer 106, and the resulting new WDM signal group is sent out into the transmission line by way of an exit end 152.

Namely, the first branch station 11 in this embodiment is configured so as to receive the allocated signal light components (λ1 to λ8) in the WDM signal group (λ1 to λ32) that has arrived there and send out the new signal light components (λ1 to λ8) into the transmission line together with the signal light components (λ9 to λ32) passing therethrough. The other branch stations 12 to 17 have a configuration similar thereto.

The demultiplexer 101 and the multiplexer 106 constitute the optical ADM (Add-Drop Multiplexer) 150. As the optical ADM, while an AWG (Arrayed Waveguide Grating) or optical circulator, for example, can be employed, a Mach-Zehnder interferometer constituted by optical fiber couplers and fiber gratings is inexpensive and preferable. Fig. 3B is a view showing the schematic configuration of a Mach-Zehnder interferometer as a specific example of the optical ADM 150. As shown in Fig. 3B, the Mach-Zehnder interferometer, which is the optical ADM 150, is constituted by optical fiber couplers 155, 156 and fiber gratings 170, 171.

Each of the optical amplifiers 21, 22 (inline amplifiers) arranged on the closed loop transmission line collectively optically amplifies the individual signal light components included in the WDM signal group propagating through the closed loop transmission line. Also, it is necessary for each of the optical amplifiers 21, 22 to cancel the cumulative loss caused by the closed loop transmission line and individual branch stations 11 to 17. Namely, the sum of the respective signal light amplification gains of the optical amplifiers 21, 22 substantially equals the cumulative loss.

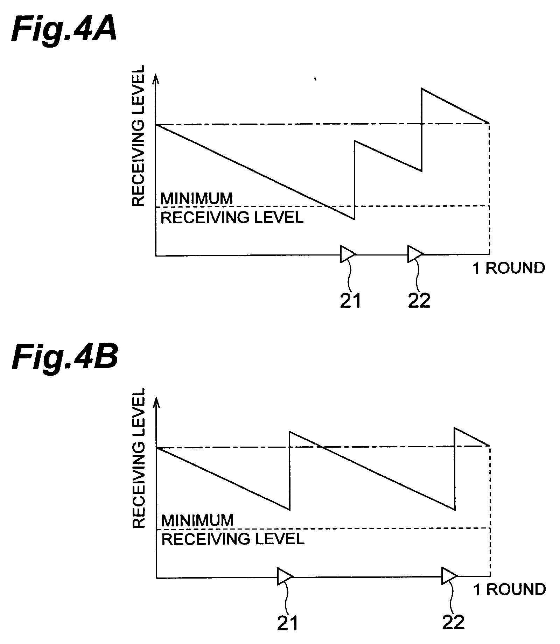

Figs. 4A and 4B are charts for explaining optical amplification operations of the optical amplifiers 21, 22. As shown in Figs. 4A and 4B, each signal light component lowers its signal level as it propagates through the closed loop transmission line or passes through the individual branch stations 11 to 17. Consequently, if the optical amplifiers 21, 22 are disposed at appropriate positions, then the signal level of each signal light component increases by the gain of each optical amplifier and substantially equals the initial signal level at the time when the signal light component has made one round of the closed loop transmission line. Depending on the respective positions where the optical amplifiers 21, 22 are disposed, however, there is a possibility of the respective signal levels of individual signal light components falling down below the minimum receiving levels in their corresponding branch stations 11 to 17 before the signal light components reach the optical amplifier 21, as shown in Fig. 4A. In this case, the branch station disposed immediately upstream the optical amplifier 21 cannot receive the signal light component allocated thereto. Therefore, in the WDM transmission system according to the present invention, each of the optical amplifiers 21, 22 is arranged such that the respective signal levels of individual signal light components reaching their corresponding branch stations 11 to 17 are not lower than the minimum receiving levels of the respective branch stations 11 to 17, as shown in Fig. 4B. If each of the optical amplifiers 21, 22 is disposed such that the signal levels of individual propagating signal light components are not lower than the minimum receiving levels of their corresponding branch stations 11 to 17 at all the positions on the closed loop transmission line, then branch stations can easily be moved or added.

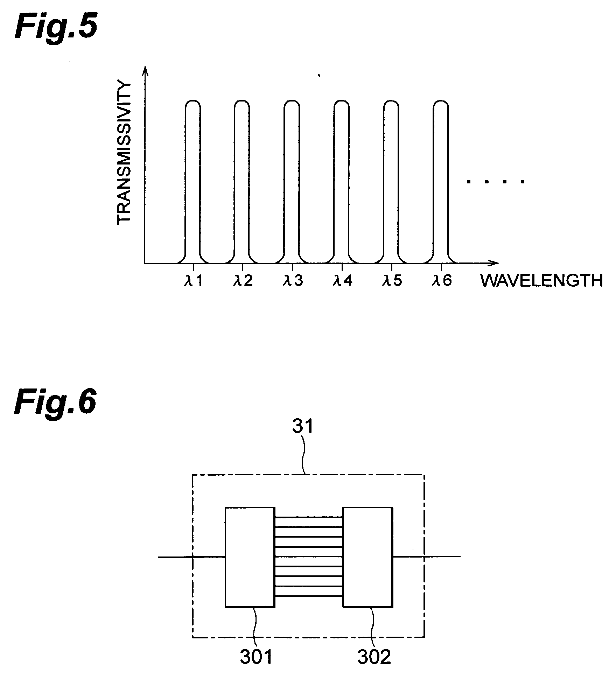

The filter 31 disposed on the closed loop transmission line functions to selectively transmit therethrough individual signal light components (included in the WDM signal group) propagating through the closed loop transmission line and eliminate the ASE that is a light component within the wavelength range excluding these signal light components. Fig. 5 is a chart showing the transmission characteristic of the filter 31. As shown in this chart, the transmissivity of the filter 31 is high only in the vicinity of the respective center wavelengths λ1, λ2, λ3, ... of the individual signal light components and low in the other wavelength regions. Namely, in a plurality of local wavelength ranges set for the respective signal light components, the filter 31 transmits therethrough the individual light components (corresponding to the individual signal light components) within the plurality of local wavelength ranges but blocks the light components within the remaining wavelength ranges excluding the local wavelength ranges. In this specification, the local wavelength range refers to a wavelength range in which crosstalk between adjacent signal light components in the plurality of signal light components included in the WDM signal group is set so as not to exceed the maximum permissible level in each of the plurality of branch stations.

The filter 31 having such a characteristic is constituted, for example, by AWGs (Arrayed Waveguide Gratings) 301, 302 as shown in Fig. 6. One AWG 301 constituting the filter 31 shown in this drawing splits, by means of a diffraction grating, the WDM signal group and ASE incident thereon and sends out, of the resulting light components, the WDM signal group to the other AWG 302 wavelength by wavelength. The AWG 302 multiplexes, by means of the diffraction grating, the signal light components that have been sent out wavelength by wavelength from the AWG 301, and sends out light thus multiplexed into the closed loop transmission line again. Thus, the filter 31 equipped with the AWGs 301, 302 demultiplexes desirable light components by means of a diffraction grating and then multiplexes these desirable light components again by means of the diffraction grating, whereby the crosstalk between the individual signal light components included in the WDM signal group is 30 dB or higher.

When the filter 31 for eliminating the ASE from the closed loop transmission line is thus provided, then the ASE would not travel around the closed loop transmission line, whereby the loop oscillation of ASE would be avoided. If there is an unused signal light component which is light having a wavelength transmitted through the filter 31 and would not be received by or transmitted from any of the branch stations 11 to 17, there is also a possibility of this unused signal light component traveling around the closed loop circuit and causing a loop oscillation. When such an unused signal light component is optically disconnected at one of the individual branch stations 11 to 17, the loop oscillation can be avoided. Here, "optically disconnecting" refers to the state where, assuming that the branch station is configured as shown in Fig. 3A, the unused signal light component incident on the demultiplexer 101 would not directly be outputted from the multiplexer 106 and the unused signal light component would not be fed into the demultiplexer 101 and then outputted from the multiplexer 106 by way of the demultiplexer 103 and multiplexer 104.

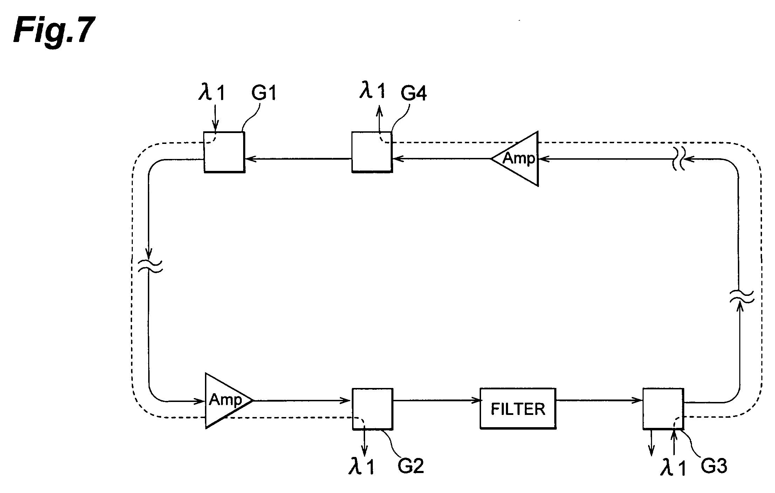

Fig. 7 is a view showing a modified mode of signal transmission in the WDM transmission system shown in Fig. 2. In the closed loop transmission line shown in this drawing, branch stations G1 to G4 adapted to receive and transmit signal light components common therebetween are arranged, whereas optical amplifiers, which are inline amplifiers, and a filter are disposed at appropriate positions. In such a transmission system, each of the branch stations G1 to G4 sends out the state of utilization of the common signal light component (e.g., the party to communicate with) to a branch station located downstream thereof belonging to the same group.

For example, in the closed transmission line, if the branch station G1 transmits predetermined information to the branch station G2 by use of the signal light component λ1, then the receiving branch station G2 sends out information indicative of the fact that communications are being carried out between the branch stations G1 and G2 to the branch station G3 located downstream thereof. Upon receiving the information, the branch station G3 determines that communications of the signal light component λ1 are possible in the section between the branch stations G3 and G4 in the closed loop transmission line. Then, if necessary, the signal light component λ1 is sent out from the branch station G3 to the branch station G4. On the other hand, the branch station G4 notifies the state of utilization of its own signal light component λ1 to the branch station G1 located downstream thereof. When the individual branch stations G1 to G4 are thus configured so as to send out the state of utilization of their common signal light components to the branch stations located downstream thereof, communications between a plurality of branch stations can be carried out by use of a single channel, thus making it possible to improve the efficiency of utilization of the closed loop transmission line.

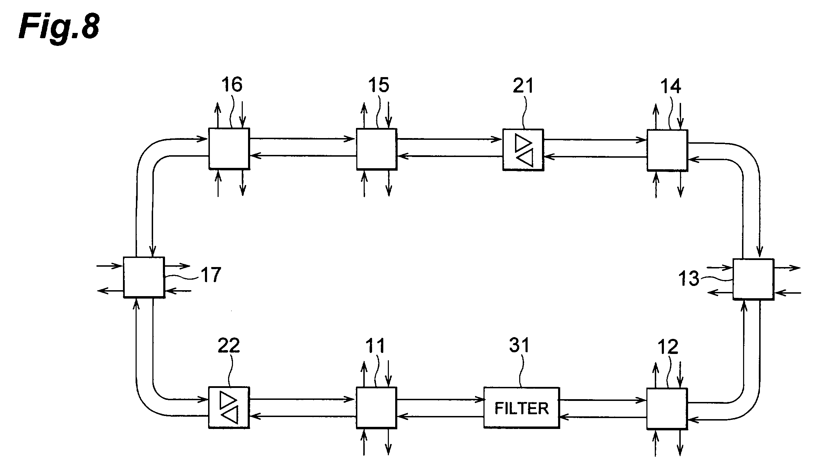

Fig. 8 is a view showing a second embodiment (double closed loop transmission line) of the WDM transmission system according to the present invention.

The WDM transmission system according to the second embodiment is equipped with two channels of closed loop transmission lines through which WDM signal groups each including a plurality of signal light components propagate in directions different from each other. Each of the closed loop systems has a configuration identical to that of the above-mentioned first embodiment.

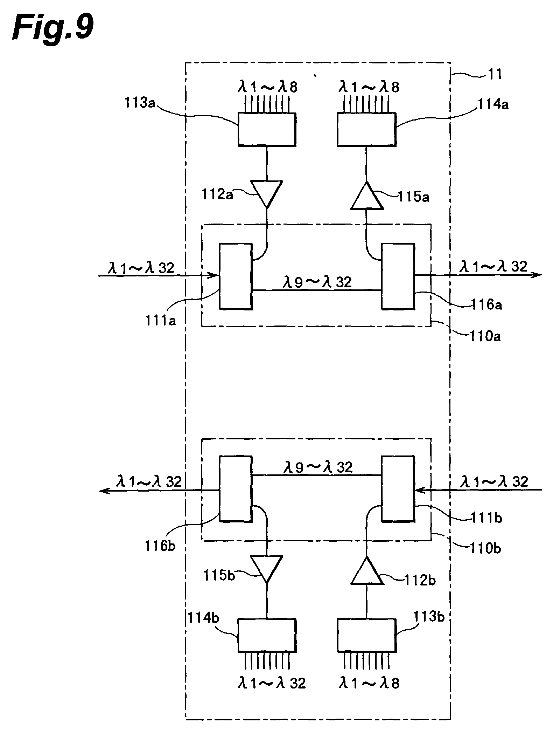

Fig. 9 is a view showing the configuration of the first branch station 11 disposed on the double closed loop transmission line, each closed loop system being provided with the individual branch stations of the first embodiment shown in Fig. 3A. Each of the other branch stations 12 to 17 in the second embodiment has basically the same configuration as that of the first branch station 11 shown in Fig. 9.

In Fig. 9, the first branch station 11 has first and second closed loop systems in which the WDM signal groups propagate in the respective directions different from each other. To begin with, the first closed loop system is provided with an optical ADM (Add-Drop Multiplexer) 110a for demultiplexing and multiplexing a part (e.g., 8 waves of signal light (λ1 to λ 8)) of the signal light (e.g., 32 waves of signal light (λ 1 to λ32)) included in the WDM signal group that has arrived there. The optical ADM 110a is constituted by a demultiplexer 111a and a multiplexer 116a. The first closed loop system further comprises a first optical amplifier 112a, a demultiplexer 113a, a multiplexer 114a, a second optical amplifier 115a, and the demultiplexer 116a.

On the other hand, the second closed loop transmission system, in which a WDM signal group propagates in the direction opposite to that in the first closed loop system, is provided with an optical ADM (Add-Drop Multiplexer) 110b for demultiplexing and multiplexing a part (e.g., 8 waves of signal light (λ1 to λ8)) of the signal light (e.g., 32 waves of signal light (λ1 to λ32)) included in the WDM signal group that has arrived there. The optical ADM 110b is constituted by a demultiplexer 111b and a multiplexer 116b. The second closed loop system further comprises a first optical amplifier 112b, a demultiplexer 113b, a multiplexer 114b, a second optical amplifier 115b, and the demultiplexer 116b. In each of the first and second closed loop systems, operations of the individual optical devices are the same as those in the optical ADM 150 shown in Fig. 3A.

The optical amplifier 21 (inline amplifier) is constituted by two systems of inline amplifiers provided for the first and second closed loop systems, respectively. Similarly, the optical amplifier 22 is provided with two systems of inline amplifiers corresponding to the first and second closed loop systems, respectively. The total gain of the optical amplifiers 21, 22, when arranged on the double closed loop transmission line, is also needed to be such an extent that it can cancel the cumulative loss caused by the closed loop transmission line and individual branch stations 11 to 17. Each of the optical amplifiers 21, 22 is arranged such that the individual signal light components arriving at their corresponding branch stations 11 to 17 have signal levels not lower than the minimum receiving levels in the respective branch stations 11 to 17.

As the filter 31, the filter having the light transmission characteristic and configuration shown in Figs. 5 and 6 is provided for each closed loop system.

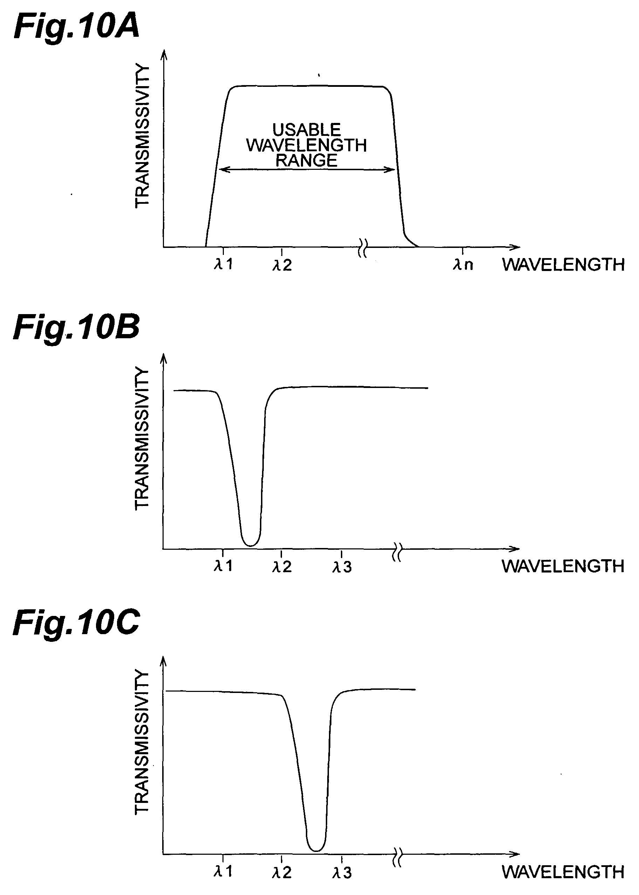

As shown in Fig. 5, the filter 31 in the second embodiment has such a transmission characteristic that it selectively transmits therethrough individual signal light components (included in the WDM signal group) but eliminates the ASE that is a wavelength component between these individual signal light components. A plurality of wavelength-selecting filters can be arranged in each of the respective transmission lines of first and second closed loop systems, so as to realize the light transmission characteristic such as that mentioned above in total. Namely, each of the closed loop transmission line may be configured such that a wavelength-selecting filter for transmitting therethrough only light components within a usable wavelength range, such as that shown in Fig. 10A, and wavelength-selecting filters for separately blocking respective light components in wavelength ranges excluding the propagating individual signal light components (λ1 to λ32), such as those shown in Figs. 10B and 10C, are arranged thereon. The ASE would not travel around the closed loop transmission line in such a configuration either, whereby the loop oscillation of the ASE would be avoided. If there is an unused signal light component which is light having a wavelength transmitted through the filter 31 and would not be received by or transmitted from any of the branch stations 11 to 17, there is also a possibility of this unused signal light component traveling around the closed loop circuit and causing a loop oscillation. In such a case, when the unused signal light component is optically disconnected at one of the individual branch stations 11 to 17, the loop oscillation can be avoided.

In accordance with the present invention, as explained in the foregoing, the cumulative loss caused by the closed loop transmission line and individual branch stations are canceled by the optical amplifiers, whereby the WDM signal group sent out from a given branch station on the closed loop station can be transmitted to any branch station. Also, providing two channels of closed loop transmission lines enables bidirectional communications between individual branch stations, thus making it possible to efficiently utilize the optical transmission line. Further, it is effective in that, since a filter which transmits therethrough individual signal light components but eliminates the ASE generated in optical amplifiers is disposed on the closed loop transmission line, the loop oscillation of ASE can effectively be excluded.

Also, when one of branch stations is configured so as to optically disconnect a signal light component which is signal light transmitted through the filter and would not be used by any of the branch stations, the loop oscillation of the unused wavelength of signal light would be avoided.

When optical amplifiers are disposed at their respective positions where the signal light components reaching their corresponding branch stations have signal levels not lower than the minimum receiving levels of the respective branch stations, the respective signal light components reaching their corresponding branch stations inevitably attain signal levels not lower than the respective minimum receiving levels in the branch stations, thus being received by the latter.

## Claims

1. A WDM transmission system comprising:
a closed loop transmission line in which a WDM signal group including a plurality of signal light components having wavelengths different from each other propagates in a predetermined direction, said closed loop transmission line including no optically disconnected portion;
a plurality of branch stations, arranged in said closed loop transmission line, functioning to demultiplex at least one signal light component from said WDM signal group and multiplex a new signal light component into the remaining signal light component in said WDM signal group without optically blocking the propagation of said WDM signal group;
at least one optical amplifier, disposed in said closed loop transmission line, for amplifying the individual signal light components of said WDM signal group; and
a filter for selectively transmitting therethrough a signal light component included in said WDM signal group and eliminating at least an unnecessary light component near a transmission wavelength thereof in light components traveling around said closed loop transmission line.

2. A WDM transmission system according to claim 1, wherein said at least one optical amplifier has a total gain which is sufficient for canceling the cumulative loss caused by said closed loop transmission line and plurality of branch stations in said WDM signal group traveling around said closed loop transmission line.

3. A WDM transmission system according to claim 1, wherein said at least one optical amplifier is positioned where, in each of said plurality of branch stations, at least one demultiplexed signal light component has a signal level not lower than a minimum receiving level of the respective branch station.

4. A WDM transmission system according to claim 1, wherein said filter includes a plurality of wavelength-selecting filters disposed at respective predetermined positions, said plurality of wavelength-selecting filters having such light transmission characteristics that unnecessary light components excluding said plurality of signal light components are blocked in wavelength bands not overlapping each other.

5. A WDM transmission system according to claim 1, wherein one of said plurality of branch stations optically disconnects a signal light component not used by any of said plurality of branch stations in the signal light components included in said WDM signal group.

6. A WDM transmission system according to claim 1, wherein a center wavelength interval between adjacent signal light components in a plurality of wavelength components included in said WDM signal group is set such that crosstalk between said adjacent signal light components is not greater than a maximum permissible level in each of said plurality of branch stations.

7. A WDM transmission system equipped with first and second loop systems for transmitting WDM signal groups in respective directions different from each other, each of said WDM signal groups including a plurality of signal light components having wavelengths different from each other,
wherein each of said first and second loop systems has a configuration identical to that of the WDM transmission system according to claim 1.

8. A WDM transmission system according to claim 7, wherein said at least one optical amplifier has a total gain which is sufficient for canceling the cumulative loss caused by said closed loop transmission line and plurality of branch stations in said WDM signal group traveling around said closed loop transmission line.

9. A WDM transmission system according to claim 7, wherein said at least one optical amplifier is positioned where, in each of said plurality of branch stations, at least one demultiplexed signal light component has a signal level not lower than a minimum receiving level of the respective branch station.

10. A WDM transmission system according to claim 1, wherein said filter includes a plurality of wavelength-selecting filters disposed at respective predetermined positions, said plurality of wavelength-selecting filters having such light transmission characteristics that unnecessary light components excluding said plurality of signal light components are blocked in wavelength bands not overlapping each other.

11. A WDM transmission system according to claim 1, wherein one of said plurality of branch stations optically disconnects a signal light component not used by any of said plurality, of branch stations in the signal light components included in said WDM signal group.

12. A WDM transmission system according to claim 7, wherein a center wavelength interval between adjacent signal light components in a plurality of wavelength components included in said WDM signal group is set such that crosstalk between said adjacent signal light components is not greater than a maximum permissible level in each of said plurality of branch stations.
